# EUROPÄISCHE PATENTSCHRIFT

(11) **EP 1 725 786 B1**
(45) Veröffentlichungstag und Bekanntmachung des Hinweises auf die Patenterteilung: **09.03.2011**
(21) Anmeldenummer: 05715069.0
(22) Anmeldetag: 09.03.2005
(51) Int. Cl.: F16F 15/02, B64C 1/12, E04B 1/98

(54) **AKTIVES ELEMENT ZUR SCHWINGUNGSREDUKTION VON BAUTEILEN, INSBESONDERE FÜR FLUGZEUGKOMPONENTEN, SOWIE VERFAHREN ZUR AKTIVEN SCHWINGUNGSREDUKTION**
ACTIVE ELEMENT FOR REDUCING THE VIBRATIONS OF COMPONENTS, IN PARTICULAR AIRCRAFT COMPONENTS AND METHOD FOR ACTIVELY REDUCING VIBRATIONS
ELEMENT ACTIF POUR LA REDUCTION DES VIBRATIONS DE PIECES STRUCTURALES, EN PARTICULIER POUR DES PIECES D'AVION, ET PROCEDE DE REDUCTION ACTIVE DES VIBRATIONS

(30) Priorität: 19.03.2004 DE 102004013966
(43) Veröffentlichungstag der Anmeldung: 29.11.2006
(73) Patentinhaber: EADS Deutschland GmbH, 85521 Ottobrunn (DE)
(72) Erfinder: MAIER, Rudolf, 83714 Miesbach (DE); TEWES, Stephan, F-91700 Ste. Geneviève des Bois (FR)
(74) Vertreter: Rasch, Michael
(86) Internationale Anmeldenummer: PCT/DE2005/000404
(87) Internationale Veröffentlichungsnummer: WO 2005/093285

(56) Entgegenhaltungen:
- WO-A-03/009402
- DE-A1- 4 007 442
- US-A- 3 952 979
- US-A- 5 052 529
- US-A1- 2002 104 927

## Beschreibung

Die vorliegende Erfindung betrifft ein aktives Element zur Schwingungsreduktion von Bauteilen, insbesondere für Flugzeugkomponenten, gemäß dem Oberbegriff von Patentanspruch 1, sowie ein Verfahren zur aktiven Schwingungsreduktion von Bauteilen gemäß dem Oberbegriff von Patentanspruch 10 (siehe z. B. US-A- 3 952 979).

In vielen Strukturen werden Störungen durch Luft- und Körperschall von einem Bauteil auf ein angrenzendes Bauteil übertragen und dort als Lärm abgestrahlt oder führen zu erhöhten, unerwünschten Schwingungspegeln. Insbesondere im Flugzeugbau ist es ein vorrangiges Ziel, derartige störende Schwingungspegel von Bauteilen zu reduzieren und dadurch den Komfort im Innenraum sowie die Haltbarkeit und Sicherheit noch weiter zu erhöhen. Als ein Beispiel ist hier die Rumpf-Trimmpaneel-Doppelwand eines modernen Flugzeuges zu nennen. Dabei werden äußere Anregungen, wie z.B. Buzz-Saw-Noise, Grenzschichtlärm und Jet-Noise sowie Vibrationen, die vom Triebwerk oder anderen mechanischen Komponenten des Flugzeugs ausgehen, über den Rumpf nach innen auf die Paneele der Innenverkleidung bzw. Trimmpaneele weitergeleitet. Dies hat zur Folge, dass die Trimmpaneele zu Schwingungen angeregt werden und dadurch Lärm abstrahlen, was von den Passagieren als störend empfunden wird.

Auch im Bereich von Hubschraubern müssen vielfältige Maßnahmen ergriffen werden, um Schwingungen, beispielsweise im Bereich der Kabine, zu reduzieren und die Lärmabstrahlung zu verringern.

In der Raumfahrt können Schwingungen vom Trägersystem auf die Nutzlast übertragen werden, was zu Störungen im späteren Betrieb, beispielsweise bei Satelliten, führen kann. Weiterhin ist auch im Bereich von Fahrzeugen eine Reduktion von Schwingungen notwendig, um den Komfort zu erhöhen und Lärm zu reduzieren.

Im Stand der Technik sind zur Reduktion von Schwingungen passive Absorber bekannt, wie z.B. Gummielemente, Federn usw. Die passiven Absorber haben jedoch den Nachteil, erst ab bestimmten Frequenzen eine isolierende Wirkung zu erzielen. Die-Druckschrift EP 0 927 313 B1 zeigt einen Schwingungsisolierungseinsatz für Flugzeugböden, bei dem eine Elastomer-Aufhängung zur Befestigung einer Bodenpaneele in Flugzeugen beschrieben wird. Durch die Isolierung des Bodens vom Rest der Struktur soll eine Reduzierung des SIL (Speech Interference Level) bzw. des Lärms in der Flugzeugkabine erzielt werden.

Weiterhin sind eine Vielzahl von aktiven Elementen zur Schwingungsisolierung und Lärmreduzierung bekannt. In der Druckschrift WO 02/23062 A1 ist ein schwingungsisolierendes Befestigungselement beschrieben, das einen elektromagnetischen Aktor umfasst. Dabei soll durch Betätigung des Aktors die Übertragung von Schwingungen zwischen aneinandergrenzenden Bauteilen reduziert werden. Das Befestigungselement kann beispielsweise als Aufhängungselement zwischen Flugzeugzelle und Paneel verwendet werden. Das bekannte Aufhängungs- bzw. Befestigungselement hat jedoch den Nachteil, dass insbesondere bei flächigen Leichtbaustrukturen keine oder nur eine sehr geringe isolierende Wirkung erzielt werden kann.

Es ist daher die Aufgabe der vorliegenden Erfindung, ein aktives Element zur Schwingungsreduktion von Bauteilen zu schaffen, mit dem eine effektive Schwingungsreduzierung und/oder Minderung des abgestrahlten Schalls erzielt werden kann, die insbesondere auch bei flächigen Strukturen bzw. Leichtbaustrukturen wirksam ist. Weiterhin soll ein Verfahren zur aktiven Schwingungsreduktion von Bauteilen, insbesondere Flugzeugkomponenten, angegeben werden, mit dem Schwingungen effektiver reduziert werden können, insbesondere auch an flächigen Strukturen bzw. Leichtbaustrukturen.

Die Aufgabe wird gelöst durch das aktive Element zur Schwingungsreduktion von Bauteilen gemäß Patentanspruch 1 und durch das Verfahren zur aktiven Schwingungsreduktion von Bauteilen gemäß Patentanspruch 10. Weitere vorteilhafte Merkmale, Aspekte und Details der Erfindung ergeben sich aus den abhängigen Ansprüchen, der Beschreibung und den Zeichnungen.

Das erfindungsgemäße aktive Element zur Schwingungsreduktion von Bauteilen ist insbesondere für Flugzeugkomponenten geeignet und umfasst eine Tragestruktur zur Befestigung eines ersten Bauteils an einem zweiten Bauteil, eine Aktoreneinheit, die an die Tragestruktur mechanisch gekoppelt ist, um die. Tragestruktur mit wechselnden Kräften zu beaufschlagen, und eine Regeleinrichtung, die auf der Grundlage eines oder mehrerer Sensorsignale die Aktoreneinheit ansteuert, um eine Übertragung von störenden Schwingungen auf einem Übertragungspfad durch die Tragestruktur zu minimieren, wobei die Tragestruktur durch die Aktoreneinheit in drei Freiheitsgraden aktiv regelbar ist, um der Übertragung der störenden Schwingungen entgegenzuwirken.

Durch die Erfindung wird eine Übertragung störender Vibrationen von einem Bauteil zum anderen Bauteil wirksamer verhindert bzw. minimiert. Besonders aufgrund der aktiven Regelung in drei Freiheitsgraden innerhalb des aktiven Elements können störende Schwingungen besonders auch bei flächigen Strukturen oder Leichtbaustrukturen, beispielsweise Wände, Innenwände, Trimmpaneele, usw., sehr wirksam vermieden werden. Bei der Erfindung wird die Tatsache berücksichtigt, dass die Schallabstrahlung durch drei Störungskomponenten verursacht wird, nämlich die Normalkraft in Richtung der Flächennormalen sowie Biegemomente in der Flächenebene. Da bei der Erfindung alle drei Komponenten durch die Aktoreneinheit gleichzeitig beeinflussbar sind, wird eine besonders effektive Schwingungsminderung bzw. Minderung des abgestrahlten Schalls erzielt. Strukturen und insbesondere flächige Strukturen, die mit dem erfindungsgemäßen aktiven Element an anderen Bauteilen oder Trägerstrukturen punktuell befestigt sind, werden wirksam von störenden Schwingungen und Vibrationen isoliert. An den Befestigungspunkten kann durch das aktive Element keine oder nur noch eine sehr geringe Übertragung von dreidimensionalen Schwingungen auf das isolierte Bauteil erfolgen.

Erfindungsgemäß umfasst die Tragestruktur mindestens eine erste Trägerplatte, die durch die Aktoreneinheit zu Schwingungen in drei Freiheitsgraden anregbar ist. Durch die Ausgestaltung der Tragestruktur mit einer Trägerplatte bzw. mit einem plattenförmigen Trägerelement kann eine besonders wirksame Ausregelung der störenden Schwingungen am Befestigungspunkt des zu isolierenden Bauteils erfolgen.

Erfindungsgemäß umfasst die Tragestruktur zusätzlich noch eine zweite Trägerplatte, die beispielsweise parallel zur ersten Trägerplatte angeordnet ist, wobei die Aktoreneinheit zwischen der ersten und der zweiten Trägerplatte angeordnet ist. Durch diese Maßnahme können besonders flächige Strukturen mittels der Trägerplatten und der dazwischenliegenden Aktoreneinheit vibrationsisolierend aneinander befestigt werden.

Bevorzugt umfasst die Aktoreneinheit drei oder mehr Aktoren, wobei eine Lastübertragung über drei oder mehr Pfade erfolgt. Dadurch können zur Anregung bzw. Kraftübertragung auf die Tragestruktur jeweils eindimensionale Aktoren verwendet werden, um damit die dreidimensionale Regelung der Tragestruktur oder der Trägerplatten zu bewirken.

Die Aktoreneinheit kann beispielsweise piezoelektrische, elektromagnetische, hydraulische und/oder pneumatische Aktoren umfassen. Dadurch können entsprechend der jeweiligen Anwendung die am besten geeigneten Aktoren ausgewählt werden.

Vorteilhafterweise sind Sensoren, die zur Erzeugung des Sensorsignals dienen, integriert in der Tragestruktur oder auf mindestens einer der Trägerplatten angeordnet. Dadurch kann eine einfache und schnelle Montage von Bauteilen mittels des aktiven Elements erfolgen, ohne dass beispielsweise separate Sensoren zusätzlich an den zu befestigenden Bauteilen angebracht werden müssen.

Bevorzugt ist mindestens eine der Trägerplatten zu Translationsbewegungen in Richtung ihrer Flächennormalen anregbar. Weiterhin ist bevorzugt mindestens eine der Trägerplatten zu Rotationsbewegungen um Achsen senkrecht zu ihrer Flächennormalen anregbar, wobei die Achsen der Rotationsbewegungen beispielsweise orthogonal zueinander ausgerichtet sind. Dadurch kann auf besonders geeignete Weise die dreidimensionale aktive Regelung oder Bewegung der Trägerplatte erfolgen.

Vorteilhaft ist mindestens ein Befestigungselement zur Befestigung des aktiven Elements an dem ersten Bauteil und/oder an dem zweiten Bauteil vorgesehen. Dadurch ist eine schnelle und sichere Montage der Bauteile mittels des aktiven Elements möglich.

Bevorzugt sind ein oder mehrere der Elemente Trägerplatte, Befestigungselement und Sensoren in mindestens eines der miteinander zu verbindenden Bauteile integriert oder integrierbar. Dadurch kann eine besonders raumsparende Montage oder Befestigung von Bauteilen erfolgen, wobei dennoch eine besonders wirksame Vibrationsisolierung am Aufhängungspunkt erzielt wird.

Insbesondere kann das aktive Element zwischen einer im Betrieb vibrierenden Trägerstruktur und einer vor Schall oder Vibrationen zu isolierenden Struktur, beispielsweise einer Innenverkleidung oder einer Wand, befestigt werden, wobei es gleichzeitig als Aufhängung oder Befestigungselement dient. Dadurch können Innenräume geschaffen werden, die weitgehend frei von Lärm sind, obwohl die Wände an vibrierenden Trägerstrukturen befestigt sind.

Vorteilhafterweise ist das aktive Element im Bereich einer Doppelwand, insbesondere eines Flugzeugs, integriert oder integrierbar, um die Schwingungsübertragung von einer Wand und/oder Trägerstruktur auf die andere Wand zu minimieren. Dadurch kann in Flugzeugen oder anderen Verkehrsmitteln der Komfort erheblich erhöht werden.

Gemäß einem anderen Aspekt der Erfindung wird ein Verfahren zur aktiven Schwingungsreduktion von Bauteilen angegeben, das insbesondere für Flugzeugkomponenten geeignet ist und die folgenden Schritte umfasst:
Befestigen eines ersten Bauteils an einem zweiten Bauteil mittels einer Tragestruktur;
Beaufschlagen der Tragestruktur mit wechselnden Kräften;
Regeln der Kräfte auf der Grundlage eines Sensorsignals, so dass eine Übertra-gung von störenden Schwingungen vom ersten Bauteil zum zweiten Bauteil minimiert wird; wobei die Tragestruktur durch eine Aktoreneinheit in drei Freiheitsgraden aktiv geregelt wird, um der Übertragung von störenden Schwingungen durch die Tragestruktur hindurch entgegenzuwirken, wobei die Tragestruktur mindestens eine erste Trägerplatte umfasst, die an der Trägerstruktur oder der Struktur oder Wand befestigt wird und in drei Freiheitsgraden Schwingungen ausführt, um die Übertragung von störenden Schwingungen der Trägerstruktur auf die Struktur oder Wand zu minimieren und mindestens eine zweite Trägerplatte umfasst, wobei die Aktoreneinheit mindestens eine der Trägerplatten zu den Schwingungen in drei Freiheitsgraden veranlasst.

Insbesondere kann die Tragestruktur an einer Wand, beispielsweise eines Flugzeugs, angebracht werden, um die Übertragung von Schwingungen von einer angrenzenden Wand oder Trägerstruktur auf die Wand zu minimieren.

Vorteile und Details, die im Zusammenhang mit dem erfindungsgemäßen aktiven Element beschrieben sind, gelten auch für das erfindungsgemäße Verfahren, ebenso wie Vorteile und Details des Verfahrens analog auch für das aktive Element gelten.

Im Folgenden wird die Erfindung beispielhaft anhand der Figuren beschrieben, von denen
- **Fig. 1**: eine perspektivische Darstellung eines aktiven Elements zur Schwin- gungsreduktion gemäß einer bevorzugten Ausführungsform der Erfin- dung zeigt;
- **Fig. 2a**: eine Draufsicht auf das aktive Element von Figur 1 zeigt;
- **Fig. 2b**: einen Schnitt entlang der Linie A-A' durch das aktive Element gemäß Figur 2a zeigt;
- **Fig. 3**: eine Seitenansicht des in Figur 1 dargestellten aktiven Elements zeigt;
- **Fig. 4**: einen Schnitt durch das aktive Element entlang der Linie B-B' in Figur 3a zeigt;
- **Fig. 5**: eine Anordnung eines aktiven Elements zwischen zwei Wandbauteilen mit einer Regelungseinheit in schematischer Darstellung zeigt;
- **Fig. 6**: den Verlauf des Schalldämmmaßes R gegenüber der Frequenz mit und ohne aktive Regelung zeigt; und
- **Fig. 7**: den Verlauf der mittleren Trimmpaneel-Beschleunigung gegenüber der Frequenz mit und ohne aktive Regelung zeigt.

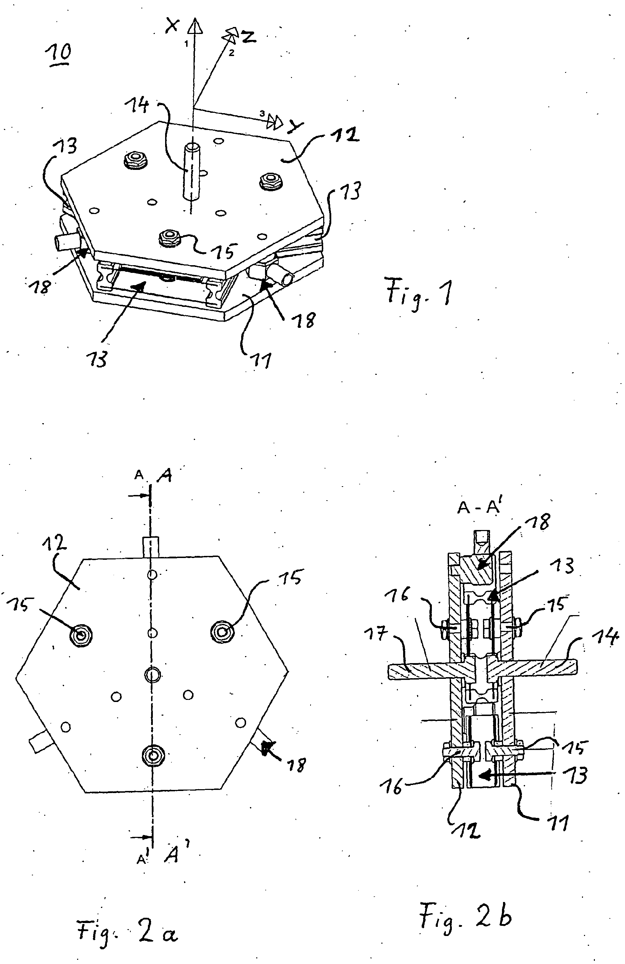

Fig. 1 zeigt in einer perspektivischen Ansicht ein aktives Element 10 zur Schwingungsreduktion von Bauteilen gemäß einer bevorzugten Ausführungsform der Erfindung. Das aktive Element 10 hat eine untere Trägerplatte 11 und eine obere Trägerplatte 12, die parallel zueinander ausgerichtet sind. Die beiden Trägerplatten 11, 12 bilden eine Tragestruktur, die dazu dient, zwei Bauteile aneinander zu befestigen.

An die Tragestruktur 11, 12 ist eine Aktoreneinheit mechanisch gekoppelt, die im vorliegenden Fall durch mehrere Aktoren 13 gebildet wird, die zwischen der unteren Trägerplatte 11 und der oberen Trägerplatte 12 angeordnet sind. Die Aktoreneinheit dient dazu, die Tragestruktur mit wechselnden Kräften zu beaufschlagen. Zu diesem Zweck wird die Aktoreneinheit durch eine in der Figur nicht dargestellte Regeleinrichtung auf der Grundlage eines Sensorsignals angesteuert, so dass durch die aktive Regelung der Tragestruktur eine Übertragung von störenden Schwingungen auf einem Übertragungspfad, der durch die Tragestruktur 11, 12 verläuft, minimiert wird. Dabei ist die durch die untere Trägerplatte 11 und die obere Trägerplatte 12 gebildete Tragestruktur durch die Aktoreneinheit in drei Freiheitsgraden aktiv regelbar, um der Übertragung der störenden Schwingungen entgegenzuwirken.

An der oberen Trägerplatte 12 ist ein länglich ausgestaltetes Befestigungselement 14 angeordnet, das zur Befestigung des aktiven Elements 10 an einem Bauteil, beispielsweise an einer zu isolierenden Struktur, dient.

Die Figuren 2a und 2b zeigen das aktive Element 10 in einer Draufsicht von oben auf die obere Trägerplatte 12 bzw. in einer Schnittansicht entlang der Linie A-A' von Figur 2a. An der oberen Trägerplatte 12 befinden sich drei Aktorenbefestigungen 15, die sich durch die obere Trägerplatte 12 erstrecken und jeweils einen Aktor halten. In der Schnittansicht von Figur 2b ist erkennbar, dass jeder Aktor 13 zusätzlich auch an der unteren Trägerplatte 11 befestigt ist, wobei sich weitere Befestigungselemente 16 durch die untere Trägerplatte 11 erstrecken, um den Aktor 13 zu halten. Daher wird jeder Aktor 13 zwischen der unteren Trägerplatte 11 und der oberen Trägerplatte 12 durch die Befestigungselemente 15, 16 gehalten.

Auch an der unteren Trägerplatte 11 befindet sich ein weiteres Befestigungselement 17, das zur Befestigung des aktiven Elements 10 an einem weiteren Bauteil dient, beispielsweise an einer Trägerstruktur, die im Betrieb Vibrationen ausgesetzt ist. Die Befestigungselemente 14, 17 für die miteinander zu verbindenden Bauteile erstrecken sich jeweils durch die zugehörige Trägerplatte 11, 12 und sind länglich ausgestaltet, im vorliegenden Fall als Schrauben. Es sind jedoch die verschiedensten Möglichkeiten der Befestigung an den miteinander zu verbindenden Bauteilen möglich, die je nach den Erfordernissen des Einzelfalls ausgewählt werden. Somit dient die Trägerstruktur, die aus den Trägerplatten 11, 12 gebildet wird, zur Befestigung oder Aufhängung eines ersten Bauteils an einem zweiten Bauteil, wobei sich im eingebauten Zustand des aktiven Elements 10 die beiden Bauteile auf gegenüberliegenden Seiten des aktiven Elements 10 befinden und über die Befestigungselemente 14 bzw. 17 mit den Trägerplatten 12 bzw. 11 verbunden sind.

Die einzelnen Aktoren 13 sind beispielsweise Piezoaktoren. Es können aber auch elektromagnetische, hydraulische, pneumatische oder sonstige Aktoren verwendet werden. Die Aktoren 13 sind geometrisch so angeordnet, dass drei Freiheitsgrade aktiv geregelt werden können, wie z.B. die Translation in Normalrichtung des Aktors sowie beide Rotationen in der Ebene senkrecht zur normalen Richtung. Durch die geometrische Anordnung der Aktoren 13 in Form eines Dreiecks, die eine zweidimensionale Anordnung in Bezug auf die daran angeschlossenen Trägerplatten bildet, kann beispielsweise die obere Trägerplatte 12 Bewegungen in drei Raumrichtungen ausführen, die in Figur 1 durch die Pfeile x, y und z gekennzeichnet sind. Bei entsprechender Regelung der Aktoren 13 kann sich beispielsweise die obere Trägerplatte 12 in Richtung ihrer Flächennormalen hin und her bewegen. Die obere Trägerplatte 12 kann jedoch bei entsprechender Ansteuerung auch um die Rotationsachse y und um die Rotationsachse z verkippt werden, wobei sich die Achsen y und z in Flächenrichtung der oberen Trägerplatte 12 erstrecken und senkrecht zueinander gerichtet sind. Diese Bewegungen der oberen Trägerplatte 12 sind im vorliegenden Beispiel relativ zur unteren Trägerplatte 11 ausführbar.

Die Regelung der Bewegung bzw. Schwingungsbewegung der oberen Trägerplatte 12 erfolgt aufgrund eines Sensorsignals, das durch mehrere Messaufnehmer oder Sensoren 18 erzeugt wird, die elektrisch an die Regeleinrichtung gekoppelt sind. Die Sensoren 18 erfassen dreidimensionale Bewegungen der Trägerplatte 12 und erzeugen daraus ein Sensor- bzw. Fehlersignal, das der Regeleinrichtung zugeführt wird. Die Regeleinrichtung steuert aufgrund des Sensorsignals die Aktoren 13 derart, dass die dreidimensionale Bewegung der Trägerplatte 12 minimiert oder vollständig ausgeregelt wird. Zu diesem Zweck sind mehrere Sensoren 18 bzw. Aufnehmer für das Fehlersignal auf den Trägerplatten 11, 12 direkt integriert, die zur Regelung verwendet werden.

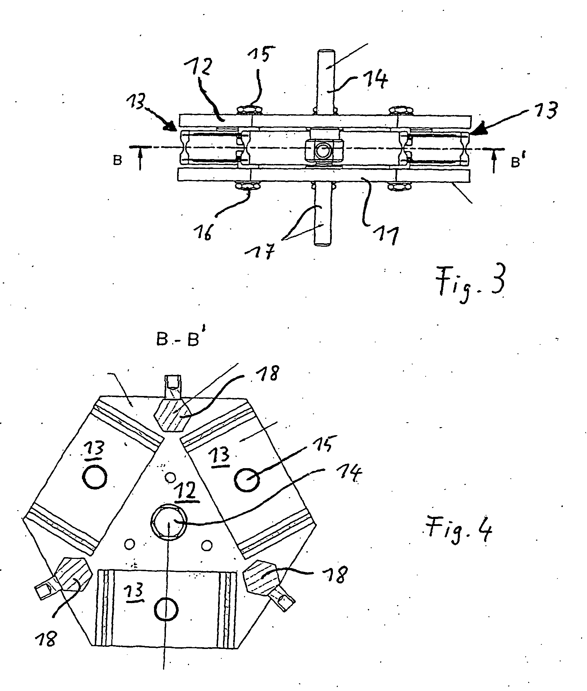

Die Figuren 3 und 4 dienen zur weiteren Veranschaulichung des Aufbaus des erfindungsgemäßen aktiven Elements 10 als bevorzugtes Ausführungsbeispiel. Dabei zeigt Figur 4 einen Schnitt durch das aktive Element entlang der Linie B-B' von Figur 3. Die sich zwischen den Trägerplatten 11 bzw. 12 befindenden Aktoren 13 sind geometrisch so angeordnet, dass sie Kräfte auf die Trägerplatten 11, 12 ausüben, die senkrecht zu deren Flächennormalen gerichtet sind. Durch die zweidimensionale Anordnung der Aktoren 13 im Zwischenraum zwischen den beiden voneinander beabstandeten Trägerplatten 11 und 12 sind die Trägerplatten 11, 12 in der Lage, dreidimensionale Bewegungen in Bezug zueinander auszuführen. Im eingebauten Zustand des aktiven Elements 10, bei dem das aktive Element 10 zwei Bauteile vibrationsisolierend miteinander verbindet, kann durch die relativ zueinander erfolgende Bewegung der Trägerplatten 11, 12 in drei Freiheitsgrade eine Vibrationsisolierung erfolgen, die eine besonders wirksame Schallisolierung des daran angeschlossenen Bauteils zur Folge hat.

In Figur 4 ist die Anordnung der Aktoren 13 in Bezug auf die sechseckige Trägerplatte 12 noch detaillierter dargestellt. Die Aktoren 13 befinden sich jeweils an einer Außenkante der Trägerplatte 12, so dass durch Ausdehnung oder Kontraktion der Aktoren 13 eine Verkippung der Trägerplatte 12 in zwei Raumrichtungen oder eine Translation in Richtung ihrer Flächennormalen erfolgen kann. Die Sensoren 18 zur Erzeugung des Fehlersignals, das an die Regeleinrichtung weitergegeben wird, sind in die Trägerplatte 12 integriert und ebenfalls an drei Punkten der Trägerplatte 12 angeordnet.

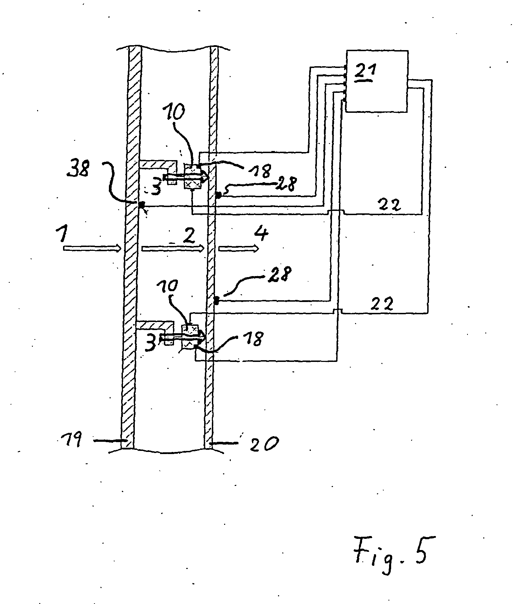

Figur 5 zeigt das aktive Element 10 im eingebauten Zustand zwischen einer Trägerstruktur 19 und einer zu isolierenden Struktur 20. In diesem Beispiel ist die zu isolierende Struktur 20, beispielsweise eine Innenraumwandung bzw. ein Trimmpaneel einer Flugzeugkabine, durch zwei aktive Elemente 10 an der Trägerstruktur 19 befestigt.

Im Betrieb wirken Störungen 1, wie beispielsweise Außenlärm oder sonstige Vibrationen, auf die Trägerstruktur 19 ein, die auf verschiedenen Übertragungspfaden 2, 3 auf die zu isolierende Struktur 20 übertragen werden. Der Übertragungspfad 2 ist beispielsweise ein Luftschallpfad, der Vibrationen der Trägerstruktur 19 durch Luftschall auf die zu isolierende Struktur 20 überträgt, während der Übertragungspfad 3 ein Körperschallpfad ist, der die Vibrationen an der Befestigungsstelle durch Körperschall überträgt. D.h., im Betrieb regen externe Störungen 1 wie Lärm und/oder äußere Lasten die Trägerstruktur 19, die beispielsweise ein Flugzeugrumpf ist, zu Schwingungen an. Diese Schwingungen übertragen sich über den Luftschallpfad 2 und/oder den Körperschallpfad 3 auf die zu isolierende Struktur 20 bzw. das Trimmpaneel und erzeugen dort Schwingungen, die wiederum als störender Lärm abgestrahlt werden.

Die abgestrahlten Störungen sind durch den Pfeil 4 gekennzeichnet. Die Störungen 4 werden durch den Einbau des aktiven Elements 10 zwischen der Trägerstruktur 19 und der zu isolierenden Struktur 20 im Zusammenspiel mit der Regelungseinrichtung 21 und den Sensoren 18 minimiert bzw. erheblich verringert. Es können an unterschiedlichen Positionen Sensoren angeordnet werden, beispielsweise an der zu isolierenden Struktur 20, dem aktiven Element 10 und/oder der Trägerstruktur 19, und bilden eine entsprechende Sensorik. Von den Sensoren 18 führen Signalleitungen zur Regeleinrichtung 21, um die aufgenommenen Fehlersignale als Sensorsignale der Regeleinrichtung 21 zuzuführen. Dabei können insbesondere auch die Schwingungen der zu isolierenden Struktur 20 durch Sensoren 28 erfasst werden und als Regelgröße dienen. Ebenso können Schwingungen der Trägerstruktur 19 durch Sensoren 38 erfasst werden und entsprechende Sensorsignale der Regeleinrichtung 21 zugeführt werden.

Über die Daten der Sensorik 18 werden von der Regeleinrichtung 21 Ansteuerungssignale 22 für die Aktoren 13 des jeweiligen aktiven Elements 10 erzeugt, so dass die Regelgröße minimiert wird.

Gemäß einem besonders bevorzugten Ausführungsbeispiel ist es ein besonderes Merkmal der Sensorik, dass sowohl Signale der in die Aktoren 13 integrierten Aufnehmer bzw. Sensoren 18 verwendet werden, als auch Signale von Aufnehmern bzw. Sensoren 28 und 38, die auf der zu isolierenden Struktur 20 bzw. der Trägerstruktur 19 angeordnet oder darin integriert sind. Durch diese besondere Sensorenanordnung ist es möglich, die strörenden Vibrationen und die dadurch erzeugte Geräuschabstrahlung der zu isolierenden Struktur 20 noch wirksamer zu reduzieren.

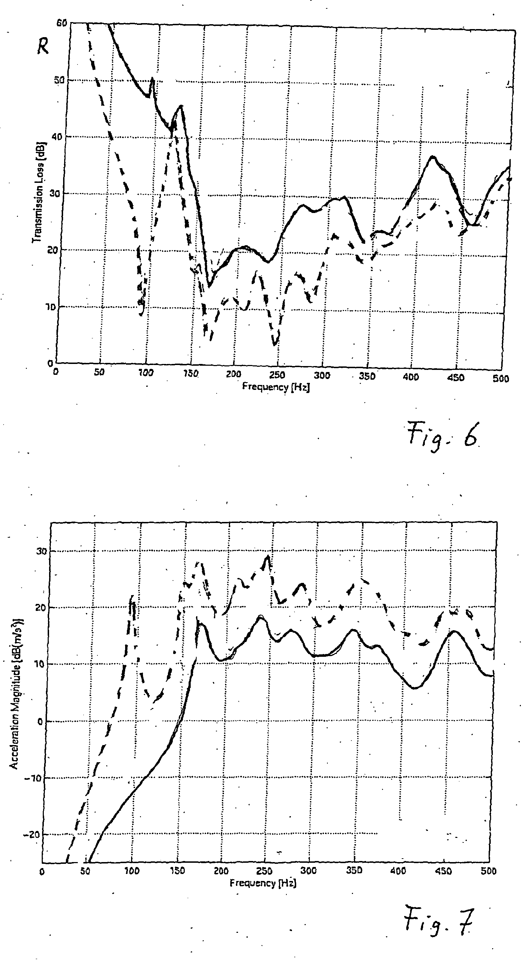

In den Figuren 6 und 7 sind beispielhaft Ergebnisse eines Tests mit einer typischen Flugzeugdoppelwand bzw. eines Rumpf-Trimmpaneels aufgeführt. Das Trimmpaneel hat eine Größe von 1 x 1 m und ist über vier aktive Aufhängungselemente, die gemäß der vorliegenden Erfindung ausgestaltet sind, am Rumpf angebracht. Dabei zeigt die Figur 6 das Schalldämmmaß R mit aktiver Regelung (durchgezogene Linie) und im Vergleich dazu ohne aktive Regelung (gestrichelte Linie). Es zeigt sich, dass das Schalldämmmaß R mit der erfindungsgemäßen aktiven Regelung über einen weiten Frequenzbereich deutlich erhöht ist. Durch den Einsatz der aktiven Isolierung mit den oben beschriebenen Elementen kann das Schalldämmmaß einer Struktur, beispielsweise einer Flugzeugstruktur, und damit der Passagierkomfort, erheblich gesteigert werden.

Figur 7 zeigt als weitere Versuchsergebnisse die mittlere Trimmpaneel-Beschleunigung mit aktiver Regelung (durchgezogene Linie) und im Vergleich dazu ohne aktive Regelung (gestrichelte Linie). Dabei zeigt sich, dass sich auch der mittlere Beschleunigungspegel auf dem Trimmpaneel über einen weiten Frequenzbereich erheblich verringert.

Durch das erfindungsgemäße Verfahren und das erfindungsgemäße aktive Element können Störlasten aktiv beeinflusst werden, die von der Trägerstruktur 19 in die zu isolierende Struktur 20 eingeleitet werden, wodurch eine schall- bzw. vibrationsisolierende Wirkung erzielt wird.

Die Anordnung mit drei oder mehr Aktoren 13 und mit einer Lastübertragung über drei Pfade gewährleistet vor allem die Beibehaltung der strukturellen Integrität und Funktionalität des Aufhängungselements besonders auch für den Fall, dass ein oder zwei Aktoren durch Defekte ausfallen sollten.

In besonderen Ausgestaltungen der Erfindung können die Trägerplatte 11, 12, das Befestigungselement 14, 17 zu den jeweiligen Strukturen sowie die Aufnehmer 18, 28, 38 für die Fehlersignale auch direkt in die zu isolierende Struktur 20 und/oder die Trägerstruktur 19 integriert werden.

Da bei vielen Anwendungen der Luftschallpfad 2 (s. Fig. 5) im Gegensatz zum Körperschallpfad 3 nur eine geringe Rolle spielt, kann es in derartigen Fällen genügen, dass zur Regelung, d.h. zur Minimierung der störenden Schwingungen, nur die in die Aktoren bzw. in die aktiven Elemente integrierten Sensoren 18 als Fehlersignalaufnehmer verwendet werden.

Durch die Erfindung wird besonders bei Flugzeugen eine Erhöhung des Passagierkomforts durch eine geringere Lärmabstrahlung erzielt. Die Erfindung führt zu geringeren Schwingungspegeln in den zu isolierenden Strukturen und damit auch zu einer geringeren Strukturbelastung, was neben dem Komfort auch die Sicherheit und die Haltbarkeit erhöht. Weiterhin wird durch die Erfindung eine Gewichtsverringerung erreicht, da ansonsten zur Erzielung einer ähnlichen akustischen Wirkung eine erhebliche Erhöhung der Strukturmasse notwendig wäre. Darüberhinaus wird durch das erfindungsgemäße aktive Element und das erfindungsgemäße Verfahren eine besonders breitbandige Wirkung erzielt, was ein erheblicher Vorteil gegenüber passiven Elementen ist, die in der Regel nur in bestimmten Frequenzbereichen wirksam sind.

## Patentansprüche

1. Aktives Element zur Schwingungsreduktion zwischen einer im Betrieb vibrierenden Trägerstruktur (19) und einer vor Schall oder Vibrationen zu isolierenden Struktur (20), insbesondere für Flugzeugkomponenten, umfassend
eine Tragestruktur (11, 12);
eine Aktoreneinheit (13), die an die Tragestruktur (11, 12) mechanisch gekoppelt ist, um die Tragestruktur (11, 12) mit wechselnden Kräften zu beaufschlagen, und
eine Regeleinrichtung (21), die auf der Grundlage ein oder mehrerer Sensorsignale die Aktoreneinheit (13) ansteuert, um eine Übertragung von störenden Schwingungen auf einem Übertragungspfad (2, 3) durch die Tragestruktur (11, 12) zu minimieren,
wobei die Tragestruktur (11, 12) durch die Aktoreneinheit (13) in drei Freiheitsgraden aktiv regelbar ist, um der Übertragung der störenden Schwingungen entgegenzuwirken **dadurch gekennzeichnet dass** das aktive Element mittels der Tragestruktur (11, 12) zwischen der Trägerstruktur (19) und der zu isolierenden Struktur (20) befestigt oder befestigbar ist,
wobei die Tragestruktur (11, 12) mindestens eine erste Trägerplatte (12), die durch die Aktoreneinheit (13) zu Schwingungen in drei Freiheitsgraden anregbar ist und eine zweite Trägerplatte (11) umfasst, wobei die Aktoreneinheit (13) zwischen der ersten und der zweiten Trägerplatte (11, 12) angeordnet ist.

2. Aktives Element nach Anspruch 1, **dadurch gekennzeichnet, dass** die Aktoreneinheit (13) drei oder mehrAktoren umfasst, wobei eine Lastübertragung über drei oder mehr Pfade erfolgt.

3. Aktives Element nach Anspruch 1 oder 2, **dadurch gekennzeichnet, dass** die Aktoreneinheit (13) piezoelektrische, elektromagnetische, hydraulische und/oder pneumatische Aktoren umfasst.

4. Aktives Element nach Anspruch 2 oder 3, **dadurch gekennzeichnet, dass** auf mindestens einer der Trägerplatten (11, 12) Sensoren (18) zur Erzeugung des Sensorsignals integriert angeordnet sind.

5. Aktives Element nach einem der Ansprüche 2 bis 4, **dadurch gekennzeichnet, dass** mindestens eine der Trägerplatten (11, 12) zu Translationsbewegungen in Richtung ihrer Flächennormalen anregbar ist.

6. Aktives Element nach einem der Ansprüche 2 bis 5, **dadurch gekennzeichnet, dass** mindestens eine der Trägerplatten (11, 12) zu Rotationsbewegungen um Achsen senkrecht zu ihrer Flächennormalen anregbar ist.

7. Aktives Element nach einem der vorhergehenden Ansprüche, **gekennzeichnet durch** mindestens ein Befestigungselement (14, 17) zur Befestigung des aktiven Elements (10) an der vibrierenden Trägerstruktur (19) und/oder an der zu isolierenden Struktur (20).

8. Aktives Element nach einem der vorhergehenden Ansprüche, **dadurch gekennzeichnet, dass** mindestens eines der Elemente Trägerplatte (11, 12), Befestigungselement (14, 17) und/oder Sensoren (18) in die benachbarte vibrierende Trägerstruktur (19) oder in die zu isolierende Struktur (20) integriert oder integrierbar ist.

9. Aktives Element nach einem der vorhergehenden Ansprüche, **dadurch gekennzeichnet, dass** es im Bereich einer Doppelwand, insbesondere eines Flugzeugs, integrierbar oder integriert ist, um die Schwingungsübertragung von einer Wand oder Trägerstruktur (19) auf die andere Wand zu minimieren.

10. Verfahren zur aktiven Schwingungsreduktion zwischen einer von Schall oder Vibrationen zu isolierenden Struktur oder Wand (20) und einer angrenzenden Trägerstruktur (19), insbesondere für Flugzeugkomponenten, **gekennzeichnet durch** die Schritte:
Befestigen der Wand (20) an der Trägerstruktur (19) mittels einer Tragestruktur (11, 12);
Beaufschlagen der Tragestruktur (11, 12) mit wechselnden Kräften;
Regeln der Kräfte auf der Grundlage ein oder mehrerer Sensorsignale, so dass eine Übertragung von störenden Schwingungen von der angrenzenden Trägerstruktur (19) zur daran befestigten Struktur oder Wand (20) minimiert wird;
wobei die Tragestruktur (11, 12) **durch** eine Aktoreneinheit (13) in drei Freiheitsgraden aktiv geregelt wird, um der Übertragung von störenden Schwingungen **durch** die Tragestruktur (11, 12) hindurch entgegenzuwirken,
wobei die Tragestruktur (11,12) mindestens eine erste Trägerplatte (12) umfasst, die an der Trägerstruktur (19) oder der Struktur oder Wand (20) befestigt wird und in drei Freiheitsgraden Schwingungen ausführt, um die Übertragung von störenden Schwingungen der Trägerstruktur (19) auf die Struktur oder Wand (20) zu minimieren und mindestens eine zweite Trägerplatte (11) umfasst, wobei die Aktoreneinheit (13) mindestens eine der Trägerplatten (12) zu den Schwingungen in drei Freiheitsgraden veranlasst.

## Claims

1. An active element for reducing vibrations between a supporting structure (19) that vibrates during operation and a structure (20) to be insulated against sound or vibrations, particularly for aircraft components, comprising
a support structure (11, 12);
an actuator unit (13) that is mechanically coupled to the support structure (11, 12) in order to act upon the support structure (11, 12) with varying forces, and
a control unit (21) that controls the actuator unit (13) based on one or more sensor signals in order to minimize the transmission of unwanted vibrations on a transmission path (2, 3) through the support structure (11, 12),
wherein the support structure (11, 12) can be actively controlled by the actuator unit (13) in three degrees of freedom in order to counteract the transmission of the unwanted vibrations, **characterized in that** the active element is or can be fixed between the supporting structure (19) and the structure (20) to be insulated by means of the support structure (11, 12), wherein the support structure (11, 12) comprises at least a first support plate (12) that can be stimulated to carry out vibrations in three degrees of freedom by the actuator unit (13) and a second support plate (11), and wherein the actuator unit (13) is arranged between the first and the second support plate (11, 12).

2. The active element according to Claim 1, **characterized in that** the actuator unit (13) comprises three or more actuators, wherein a load transmission takes place along three or more paths.

3. The active element according to Claim 1 or 2, **characterized in that** the actuator unit (13) comprises piezoelectric, electromagnetic, hydraulic and/or pneumatic actuators.

4. The active element according to Claim 2 or 3, **characterized in that** sensors (18) for generating the sensor signal are arranged in an integrated fashion on at least one of the support plates (11, 12).

5. The active element according to one of Claims 2 to 4, **characterized in that** at least one of the support plates (11, 12) can be stimulated to carry out translatory motions in the direction of its surface normal.

6. The active element according to one of Claims 2 to 5, **characterized in that** at least one of the support plates (11, 12) can be stimulated to carry out rotatory motions about axes extending perpendicular to its surface normal.

7. The active element according to one of the preceding claims, **characterized by** at least one mounting element (14, 17) for mounting the active element (10) on the vibrating supporting structure (19) and/or on the structure (20) to be insulated.

8. The active element according to one of the preceding claims, **characterized in that** at least one of the elements support plate (11, 12), mounting element (14, 17) and/or sensors (18) is or can be integrated into the adjacent vibrating supporting structure (19) or into the structure (20) to be insulated.

9. The active element according to one of the preceding claims, **characterized in that** it is or can be integrated into the region of a double wall, particularly of an aircraft, in order to minimize the transmission of vibrations from the one wall or supporting structure (19) to the other wall.

10. A method for actively reducing vibrations between a structure or wall (20) to be insulated against sound or vibrations and an adjacent supporting structure (19), particularly for aircraft components, **characterized by** the steps:
mounting the wall (20) on the supporting structure (19) by means of a support structure (11, 12);
acting upon the support structure (11, 12) with varying forces;
controlling the forces based on one or more sensor signals such that the transmission of unwanted vibrations from the adjacent supporting structure (19) to the structure or wall (20) mounted thereon is minimized;
wherein the support structure (11, 12) is actively controlled in three degrees of freedom by an actuator unit (13) in order to counteract the transmission of unwanted vibrations through the support structure (11, 12), wherein the support structure (11, 12) comprises at least a first support plate (12) that is mounted on the supporting structure (19) or the structure or wall (20) and carries out vibrations in three degrees of freedom in order to minimize the transmission of unwanted vibrations of the supporting structure (19) to the structure or wall (20) and at least a second support plate (11), and wherein the actuator unit (13) causes at least one of the support plates (12) to carry out vibrations in three degrees of freedom.

## Revendications

1. Elément actif pour la réduction des vibrations entre une structure de support (19) vibrant en fonctionnement et une structure (20) à isoler contre le son ou les vibrations, en particulier pour des pièces d'avion, comprenant
une structure porteuse (11, 12) ;
une unité d'actionneurs (13) couplée mécaniquement à la structure porteuse (11, 12) pour fournir des forces alternantes à la structure porteuse (11, 12), et
un dispositif de réglage (21) qui commande l'unité d' actionneurs (13) en se basant sur un ou plusieurs signal/aux de capteur pour réduire au minimum la transmission de vibrations perturbatrices sur un chemin de transmission (2, 3) à travers la structure porteuse (11, 12),
sachant que la structure porteuse (11, 12) peut être réglée activement dans trois degrés de liberté par l'unité d'actionneurs (13) pour agir contre la transmission des vibrations perturbatrices, **caractérisé en ce que** l'élément actif est fixé ou peut être fixé entre la structure de support (19) et la structure (20) à isoler au moyen de la structure porteuse (11, 12), sachant que la structure porteuse (11, 12) comprend au moins un premier plateau de support (12) qui peut être impulsé par l'unité d'actionneurs (13) pour des vibrations dans trois degrés de liberté et un deuxième plateau de support (11), sachant que l'unité d'actionneurs (13) est agencée entre les premier et deuxième plateaux de support (11, 12).

2. Elément actif selon la revendication 1, **caractérisé en ce que** l'unité d' actionneurs (13) comprend trois actionneur(s) ou plus, sachant que la transmission de charge s'effectue par trois chemins ou plus.

3. Elément actif selon la revendication 1 ou 2, **caractérisé en ce que** l'unité d'actionneurs (13) comprend des actionneurs piézoélectriques, électromagnétiques, hydrauliques et/ou pneumatiques.

4. Elément actif selon la revendication 2 ou 3, **caractérisé en ce que** sur au moins un des plateaux de support (11, 12), des capteurs (18) sont agencés de manière intégrée pour produire le signal de capteur.

5. Elément actif selon l'une des revendications 2 à 4, **caractérisé en ce qu'**au moins un des plateaux de support (11, 12) peut être impulsé pour des mouvements de translation en direction de leur normale de surface.

6. Elément actif selon l'une des revendications 2 à 5, **caractérisé en ce qu'**au moins un des plateaux de support (11, 12) peut être impulsé pour des mouvements de rotation sur des axes verticaux à leur normale de surface.

7. Elément actif selon l'une des revendications précédentes, **caractérisé par** au moins un élément de fixation (14, 17) pour fixer l'élément actif (10) sur la structure de support (19) vibrante et/ou sur la structure à isoler (20).

8. Elément actif selon l'une des revendications précédentes, **caractérisé en ce qu'**au moins un des éléments, plateau de support (11, 12), élément de fixation (14, 17) et/ou capteurs (18) est intégré ou peut être intégré dans la structure de support (19) vibrante voisine ou dans la structure à isoler (20).

9. Elément actif selon l'une des revendications précédentes, **caractérisé en ce qu'**il peut être intégré ou est intégré au niveau d'une double paroi, en particulier d' un avion, afin de réduire au minimum la transmission de vibrations d'une paroi ou de la structure de support (19) à l'autre paroi.

10. Procédé de réduction active des vibrations entre une structure ou paroi (20) à isoler du son ou des vibrations et une structure de support (19) adjacente, en particulier pour des pièces d'avion, **caractérisé par** les étapes de :
fixation de la paroi (20) sur la structure de support (19) au moyen d'une structure porteuse (11, 12) ;
fourniture de forces alternantes à la structure porteuse (11, 12) ;
réglage des forces en se basant sur un ou plusieurs signal/aux, de façon à ce qu'une transmission de vibrations perturbatrices de la structure de support (19) adjacente à la structure ou paroi (20) fixée dessus soit réduite au minimum ;
sachant que la structure porteuse (11, 12) est réglée activement dans trois degrés de liberté par une unité d'actionneurs (13) pour agir contre la transmission des vibrations perturbatrices à travers la structure porteuse (11, 12), sachant que la structure porteuse (11, 12) comprend au moins un premier plateau de support (12) qui est fixé sur la structure de support (19) ou sur la structure ou paroi (20) et effectue des vibrations dans trois degrés de liberté, afin de
réduire au minimum la transmission de vibrations perturbatrices de la structure porteuse (19) à la structure ou paroi (20) et comprend au moins un deuxième plateau de support (11), sachant que l'unité d'actionneurs (13) fait faire à au moins un des plateaux de support (12) les vibrations dans les trois degrés de liberté.
